# EUROPÄISCHE PATENTANMELDUNG

(11) **EP 1 782 946 A1**
(43) Veröffentlichungstag der Anmeldung: **09.05.2007**
(21) Anmeldenummer: 05024297.3
(22) Anmeldetag: 08.11.2005
(51) Int. Cl.: B32B 27/12, B60J 11/00, D06N 3/00, D06N 3/04

(54) **Wiederverwendbare Schutzhaube für Fahrzeuge und Fahrzeugteile sowie Verwendung eines Verbundmaterials zur Herstellung der wiederverwendbaren Schutzhaube**

(71) Anmelder: Caplast Kunststoffverarbeitungs GmbH, 59394 Nordkirchen (DE)
(72) Erfinder: Nienhaus, Ralf, 59394 Nordkirchen (DE)
(74) Vertreter: HOFFMANN EITLE

(57) **Zusammenfassung**

Die vorliegende Erfindung betrifft eine konfektionierte Schutzhaube aus Verbundmaterial für Fahrzeuge und Fahrzeugteile, wobei das Verbundmaterial ein fahrzeugseitiges gerauhtes Trägermaterial und ein außenseitiges Beschichtungsmaterial aus einem thermoplastischen Kunststoff in Film- oder Folienform umfasst, und wobei das Trägermaterial ein Gewebe, Gewirke oder Gelege oder ein mit einem Gewebe, Gewirke oder Gelege armierter Vliesstoff ist.

## Beschreibung

Die vorliegende Erfindung betrifft eine wiederverwendbare Schutzhaube für Fahrzeuge und Fahrzeugteile sowie die Verwendung eines Verbundmaterials, das ein Trägermaterial und ein Beschichtungsmaterial aus einem thermoplastischen Kunststoffen umfasst, zur Herstellung der wiederverwendbaren Schutzhaube.

### Stand der Technik

Schutzhauben für Fahrzeuge und Fahrzeugteile sollen äußere Einwirkungen wie Staub, Schmutz und Wasser auf die Oberfläche des zu schützenden Gegenstands sowie mechanische Beschädigungen wie Kratz- und Schleifschäden und die Bildung von Kondensations- und Staunässe auf dem zu schützenden Gegenstand verhindern. Sie verwenden daher vorzugsweise ein Material, das von innen wasserdampf- und lichtdurchlässig und von außen UVstabil, chemikalienbeständig, wasser- und staubundurchlässig und bedruckbar ist. Gattungsgemäße Schutzhauben für Fahrzeuge und Fahrzeugteile sowie entsprechend einsetzbare Verbundmaterialien sind aus der Offenlegungsschrift DE 100 19 903 A1 sowie aus der Gebrauchsmusterschrift DE 201 01 155 U1 bekannt.

Bei der in DE 100 19 903 A1 beschriebenen Schutzhaube wird ein Material eingesetzt, das aus einem Vliesstoff (als Trägermaterial) aus einem thermoplastischen Copolymer besteht, der einseitig über einen Kleber mit einem genadelten Folienwerkstoff verbunden ist. Der Vliesstoff bildet dabei die Innenseite der Schutzhaube und der Kunststoff die Außenseite. Die Schutzhaube soll deshalb atmungsaktiv sein, so dass sich darunter kein Kondenswasser niederschlagen kann. Gleichzeitig ist das umhüllte Objekt gegen äußere Einflüsse geschützt.

Die aus DE 201 01 155 U1 bekannte Schutzhaube für Kraftfahrzeuge verwendet als Trägermaterial einen Vliesstoff aus Polypropylen, der mit einem thermoplastischen Ehtylen/Butylacrylat-Copolymer durch Extrusionsbeschichtung beschichtet ist.

Es hat sich gezeigt, dass die derart aufgebauten Schutzhauben nur einfach verwendbar sind, da das eingesetzte Verbundmaterial einer Reinigung, die vor einer erneuten Verwendung erforderlich ist, nicht standhält. Da das Verbundmaterial zur Verwendung als Schutzhaube für Fahrzeuge und Fahrzeugteile aufwendig konfektioniert (zugeschnitten) werden muss, ist eine mehrfache Verwendung auch aus wirtschaftlichen Gründen sehr wünschenswert und wird insbesondere von der Automobilindustrie angestrebt.

Der vorliegenden Erfindung liegt daher die Aufgabe zugrunde, eine Schutzhaube für Fahrzeuge und Fahrzeugteile bereitzustellen, die wiederverwendbar (mehrfach verwendbar) ist und eine gleichwertige oder sogar verbesserte Schutzwirkung gegenüber den aus dem Stand der Technik bekannten Schutzhauben bietet.

### Zusammenfassung der Erfindung

Die Aufgabe wird erfindungsgemäß gelöst durch die Bereitstellung einer konfektionierten Schutzhaube aus Verbundmaterial für Fahrzeuge und Fahrzeugteile, wobei das Verbundmaterial ein fahrzeugseitiges Trägermaterial und ein außenseitiges Beschichtungsmaterial aus einem thermoplastischen Kunststoff in Film- oder Folienform umfasst, und wobei das Trägermaterial ein Gewebe, Gewirke oder Gelege oder ein mit einem Gewebe, Gewirke oder Gelege armierter Vliesstoff ist.

Erfindungsgemäß unterscheidet sich das verwendete Verbundmaterial von solchen des Standes der Technik insbesondere dadurch, dass das Trägermaterial kein Vliesstoff ist, d.h. kein verfestigtes Textil aus stochastisch abgelegten Fasern oder Filamenten. Im Stand der Technik wurden bislang nur Vliesstoffe als Trägermaterial für Schutzhauben für Fahrzeuge und Fahrzeugteile eingesetzt, insbesondere wegen ihres (bei gleicher Reißfestigkeit) günstigeren Preises im Vergleich zu Geweben, Gewirken und Gelegen. Es wurde jetzt überraschend festgestellt, dass das erfindungsgemäß eingesetzte Verbundmaterial, selbst wenn es eine Reißfestigkeit besitzt, die nicht über diejenige eines entsprechenden Verbundmaterials mit Vliesstoff als Trägermaterial hinausgeht, dennoch den Belastungen mehrerer Reinigungsvorgänge standhält und somit wunschgemäß wiederverwendbar ist.

Weiterhin wird durch die vorliegende Erfindung die Verwendung eines Verbundmaterials wie oben definiert zur Herstellung einer Schutzhaube für Fahrzeuge und Fahrzeugteile bereitgestellt.

### Ausführliche Beschreibung der Erfindung

### Trägermaterial

Das Trägermaterial ist ein Gewebe, Gewirke oder Gelege oder ein Vliesstoff, der mit einem Gewebe, Gewirke, Gelege armiert und somit verstärkt ist, und unterscheidet sich somit von bisher verwendeten Trägern. Vorzugsweise ist das Trägermaterial ein Gewebe oder Gewirke, die jeweils aus Garnen hergestellt werden, besonders bevorzugt ein Gewebe. Es kann aber auch ein Gelege sein, das durch Ablegen von Fasern in geordneter Struktur und anschließendes Verfestigen hergestellt wird.

Das Trägermaterial kann aus Naturfasern, synthetischen Fasern oder Mischungen daraus hergestellt werden. Exemplarische Ausführungsformen für Naturfasern sind Baumwolle, Jute, Flachs, Hanf und Wolle sowie Mischungen aus einem oder mehreren daraus. Exemplarische Ausführungsformen für Materialien für synthetische Fasern sind Polyethylen (PE), Polypropylen (PP), Polyamid (PA), Polyester (PES), Polyacrylnitril (PAN) und Viskose (CV) sowie Mischungen aus einem oder mehreren daraus. Der Ausdruck "synthetische Fasern" soll hier andere Ausgestaltungen aus synthetischem Material, z.B. Bändchen, einschließen. Das Trägermaterial ist bevorzugt aus synthetischer Faser, besonders bevorzugt aus Polypropylen, und ist insbesondere ein Polypropylengewebe.

Das Flächengewicht des Trägermaterials ist bevorzugt zwischen 60 und 200 g/m² und besonders bevorzugt zwischen 80 und 120 g/m². Der Fachmann kann ein geeignetes Flächengewicht für eine angemessene Balance zwischen erforderlicher mechanischer Festigkeit und wirtschaftlichen Erwägungen (höhere Kosten bei höherem Flächengewicht) ohne weiteres ermitteln.

Für einen erhöhten Schutz des zu schützenden Kraftfahrzeugs oder Kraftfahrzeugteils und insbesondere von lackierten Oberflächen ist die fahrzeugseitige Fläche des Trägermaterials vorzugsweise gerauht, so dass es eine weichere Außenoberfläche erhält. Insbesondere hat sich ein fahrzeugseitig gerauhtes Polypropylengewebe mit einem Flächengewicht von ca. 100 g/m² als besonders geeignet zur Verwendung für die erfindungsgemäße Schutzhaube erwiesen, da Polypropylen beispielsweise im Vergleich zu Polyamid (PA), Polyester (PES) oder Polyacrylnitril (PAN) eine weichere Faser besitzt. Besonders bevorzugt ist die wegen des hydrophoben Charakters der Polyolefine wasserabweisende Eigenschaft. Staunässe kann entweder unmittelbar abfließen oder durch die wasserdampfdurchlässige Beschichtung herausdiffundieren.

Die Verwendung von Geweben aus Naturfasern hat ebenfalls Vorzüge, da sich diese durch besonders weiche Fasern auszeichnen. Auch die thermische Belastbarkeit und die dadurch bedingte Dimensionsstabilität liegen über den entsprechenden Werten der synthetischen, thermoplastischen Fasern. Besonders bevorzugt ist eine hohe UV-Stabilität.

Die Fasern des Trägermaterials können optional eingefärbt sein. Weiterhin können sie mit Additiven, beispielsweise UV-Stabilisatoren, Fungiziden oder Flammenschutzmitteln, versetzt sein, sofern dies sich nicht nachteilig auf die zu schützende Oberfläche auswirkt. Es kann insbesondere vorteilhaft sein, wenn das Trägermaterial frei von Lösungsmitteln und Weichmachern ist, so dass eine nachteilige Wirkung auf die zu schützende (Lack-) Oberfläche weniger wahrscheinlich ist und bei der abschließenden Verbrennung des Materials nach mehreren Einsatzzyklen keine umweltschädlichen Stoffe entstehen.

### Beschichtungsmaterial

Das Beschichtungsmaterial kann allgemein jedes herkömmlich für Schutzhauben verwendete, thermoplastische Kunststoffmaterial sein, das zu einem Film oder einer Folie verarbeitet werden kann, als einzelnes Kunststoffmaterial, Blend oder Compound. Exemplarisch können genannt werden: Polyethylen (PE), Polypropylen (PP), Polyvinylchlorid (PVC), Polyamid (PA), thermoplastisches Polyurethan (TPU) und Polyethylenterephthalat (PET) sowie Mischungen aus einem oder mehreren daraus. Geeignete Kunststoffmaterialien können auch Copolymere sein, insbesondere solche aus den Monomeren, die den zuvor genannten Polymeren zugrunde liegen. Je nach Art des Polymers kann eine geeignete oder gewünschte Wasserdampfdurchlässigkeit durch den Fachmann eingestellt werden.

Bevorzugt verwendete Copolymere sind diejenigen mit Ethylen, z.B. Ethylen/Methylacrylat-Copolymere (EMA), Ethylen/Acrylsäure-Copolymere (EAA), Ethylen/Butylacrylat-Copolymere (EBA) und Ethylen/Vinylacetat-Copolymere (EVA), wobei der Comonomer-Gehalt (d.h. Nicht-Ethylen-Gehalt) vorzugsweise bei 9 bis 40 Gew.-% liegt. Diese können eine Funktionsschicht mit verbesserter Temperatur-, UV- und chemischer Beständigkeit, Verschweißbarkeit, Wirtschaftlichkeit und Wasserdichtigkeit bei gleichzeitiger Dampfdurchlässigkeit liefern.

Die Verwendung von thermoplastischem Polyurethan (TPU) als Beschichtungsmaterial hat ebenfalls Vorzüge, da sich dieses durch eine hohe Kratzfestigkeit und chemische Beständigkeit auszeichnet. Auch die thermische Belastbarkeit liegt über derjenigen der Polyolefine. Besonders bevorzugt ist eine hohe UV-Stabilität und Wasserdampfdurchlässigkeit, so dass auch bei niedrigen Außentemperaturen Kondenswasser unter einer daraus hergestellten Schutzhaube für Fahrzeuge zügig herausdiffundieren kann.

Das Beschichtungsgewicht des thermoplastischen Kunststoffmaterials kann in üblicher Weise an die Anforderungen der Schutzhaube angepasst werden und beträgt vorzugsweise zwischen 10 und 250 g/m² und besonders bevorzugt zwischen 60 und 100 g/m².

Das Beschichtungsmaterial kann auch eingefärbt sein. Weiterhin kann es mit Additiven, beispielsweise UV-Stabilisatoren oder Flammschutzmitteln, versetzt sein. Wie beim Trägermaterial ist es auch beim Beschichtungsmaterial besonders vorteilhaft, wenn das Material frei von Lösungsmitteln und Weichmachern ist, so dass es gesundheitlich unbedenklich und bei der abschließenden Verbrennung nach mehreren Einsatzzyklen keine umweltschädlichen Nebenprodukte entstehen.

Besonders bevorzugt wird Ethylen/Butylacrylat-Copolymer mit einem Butylacrylat-Gehalt von 17 Gew.-% verwendet, das z.B. als Elvalloy 3717 von der Fa. DuPont mit UV-Stabilisator erhältlich ist und vorzugsweise mit einem Beschichtungsgewicht von 80 g/m² verwendet wird.

### Verbundmaterial und Schutzhaube

Die Schutzhaube aus dem erfindungsgemäßen Verbundmaterial wird durch Konfektionieren (Zuschneiden und entsprechendes Weiterverarbeiten, z.B. Vernähen, Verkleben und/oder Verschweißen) an die Oberflächenform des zu schützenden Kraftfahrzeugs oder Kraftfahrzeugteils angepasst. Die Konfektionierung erfolgt in fachüblicher Weise, z.B. wie in der Gebrauchsmusterschrift DE 299 07 857 U1 beschrieben.

Das Verbundmaterial ist aus Gründen der Sicherheit beim Transport von Kraftfahrzeugen vorzugsweise transluzent, so dass geschützte Fahrzeugteile wie z.B. Rückleuchten, Bremslichter und Fahrrichtungsanzeiger sichtbar bleiben.

Für Mitteleuropa wird, sofern erforderlich, das Verbundmaterial einer erfindungsgemäßen Schutzhaube vorzugsweise derart mit UV-Stabilisatoren ausgerüstet, dass die Schutzhaube mindestens zwei bis drei Jahre gegen UV-Strahlen beständig ist.

Je nach Anforderung an das Verbundmaterial und die daraus hergestellte Schutzhaube kann das Verbundmaterial eine oder mehrere, zusätzliche Schichten in flächiger oder partieller Form aufweisen. Zum Beispiel kann außenseitig auf dem Beschichtungsmaterial eine weitere Folie oder ein weiterer Film vorgesehen sein, insbesondere aus einem Material aus der Gruppe derjenigen Materialien, die bereits für das Beschichtungsmaterial aufgeführt wurden. Vorzugsweise sind diese Filme oder Folien aus Gründen der Haftungsverbesserung aus dem gleichen Material wie das Beschichtungsmaterial selbst. Diese Filme und Folien können weitere funktionelle Eigenschaften vermitteln, z.B. eine höhere mechanische oder chemische Beständigkeit, oder auch wasser- oder staubabweisende Eigenschaften. Falls diese Schicht (Schichten) nur partiell vorhanden ist, können auf diese Weise insbesondere Beschriftungen und/oder Markierungen auf dem Verbundmaterial erzeugt werden. Wenn der Zusammenhalt zwischen Trägermaterial und Beschichtungsmaterial nicht wesentlich beeinträchtigt wird, ist es ebenfalls möglich, dazwischen eine zusätzliche offenmaschige Schicht vorzusehen, z.B. ein Netz, um beispielsweise die Reißfestigkeit des Verbundmaterials und damit der Schutzhaube weiter zu erhöhen.

Es hat sich herausgestellt, dass die erfindungsgemäße Schutzhaube waschbeständig ist, ohne den Zusammenhalt zwischen dem Trägermaterial und dem Beschichtungsmaterial zu verlieren, so dass sie nach Verwendung gewaschen und als Schutzhaube wiederverwendet werden kann. Sie zeichnet sich somit nicht nur durch eine Festigkeit aus, die diejenige von herkömmlichen Schutzhauben erreicht oder sogar übertrifft, sondern hat (bei gleicher Reißfestigkeit) überraschenderweise eine erhöhte Waschbeständigkeit.

### Herstellungsverfahren

Das Verbundmaterial für die erfindungsgemäße Schutzhaube kann durch verschiedene Laminier- und Beschichtungsverfahren hergestellt werden.

Beispielsweise kann das Verbundmaterial durch Folienlaminierung hergestellt werden, bei der zunächst eine Folie aus dem Beschichtungsmaterial hergestellt wird, die in einem weiteren Schritt mit Schmelzklebern oder lösungsmittelhaltigen Klebern gegen das Trägermaterial kaschiert wird. Alternativ kann die Folie als Beschichtungsmaterial z.B. thermisch oder mittels Ultraschall mit dem Trägermaterial verschweißt werden. Weiterhin besteht auch die Möglichkeit, die Folie mittels Extrusionskaschierung auf das Trägermaterial aufzubringen.

In einem anderen Verfahren wird das Trägermaterial mittels Rakel-, Foulard-, Pflatschwerk- und Walzenauftrags-Systemen mit lösungsmittelhaltigen, flüssigen Polymerpasten beschichtet.

In einem bevorzugten Verfahren wird das Beschichtungsmaterial direkt mittels Extrusionsbeschichtung auf das Trägermaterial aufgebracht. Zum Beispiel wird dazu das als Beschichtungsmaterial verwendete thermoplastische Polymer in einem Extruder unter Druck, vorzugsweise bis ca. 130 bar, bei einer vom verwendeten Polymer abhängigen Massetemperatur, beispielsweise 270 °C, zu einer Polymerschmelze verflüssigt und in einem Breitschlitzwerkzeug auf die entsprechende Fertigbreite geführt. Im gekühlten Walzenspalt wird die flüssige Schmelze bei einem Druck von beispielsweise 20 bar in das Trägermaterial gedrückt, so dass es zu einem Film erstarrt und eine dauerhafte Verbindung eingeht. Die Vorteile dieses Verfahrens sind zum einen das direkte Auflegen des Films, bei dem gegenüber der Folienlaminierung ein Arbeitschritt eingespart wird, und die Tatsache, dass lösungsmittelfreie, ökologisch unbedenkliche Werkstoffe eingesetzt werden können.

Die optionalen weiteren Schichten können in fachbekannter, ähnlicher Weise hergestellt und in ein Verbundmaterial eingearbeitet werden, entweder vor, nach oder mit der Herstellung des Verbundmaterials aus Trägermaterial'und Beschichtungsmaterial.

Das optionale Rauhen der fahrzeugseitigen Oberfläche der Trägerschicht kann durch mechanisches Rauhen oder Texturieren erfolgen. Beim mechanischen Rauhen erfolgt dies vorzugsweise durch Mittel wie zum Beispiel Drahtbürsten, die im Vergleich zu Mitteln wie Sandpapier oder Bimsstein keinen Abrieb erzeugen. Bei den letzten Mitteln besteht die Gefahr, dass der Abrieb im Verbundmaterial verbleibt und somit zu einer Beschädigung der zu schützenden Oberfläche führt. Die Rauhung der fahrzeugseitigen Oberfläche des Trägermaterials kann sowohl vor als auch nach der Herstellung des Verbundmaterials vorgenommen werden. Vorzugsweise wird aber ein bereits einseitig gerauhtes Trägermaterial verwendet und auf der anderen Seite mit dem Beschichtungsmaterial versehen, um das Verbundmaterial bereitzustellen. Ein beidseitig gerauhtes Trägermaterial ist auch einsetzbar.

Die Rauhung resultiert in einer vorteilhaften Strukturierung der fahrzeugseitigen Oberfläche der Schutzhaube, die zu einer deutlich geringeren Beanspruchung der zu schützenden Oberfläche des Fahrzeugs und Fahrzeugteils führt. Dies ist im Vergleich mit den herkömmlich als Trägermaterial verwendeten Vliesstoffen ein weiterer Vorteil dieser erfindungsgemäßen Ausführungsform.

### Beispiele

Ein Verbundmaterial wurde hergestellt durch Extrusionsbeschichten eines einseitig gerauhten PP-Gewebes (Flächengewicht 100 g/m²) mit einem Ethylen/Butylacrylat-Copolymer (17 Gew.-% Butylacrylat-Gehalt, mit UV-Stabilisator, Elvalloy 3717 von DuPont, 80 g/m² Beschichtungsgewicht).

Das erhaltene Verbundmaterial wurde zehn Mal unter Standardbedingungen gewaschen und zeigte keine Zerstörung des Zusammenhalts zwischen Träger- und Beschichtungsmaterial.

Zum Vergleich wurde ein herkömmliches Verbundmaterial aus einem Polypropylen-Spinnvliesstoff mit 80 g/m² Flächengewicht durch Extrusionsbeschichtung unter gleichen Bedingungen und mit dem gleichen Beschichtungsmaterial hergestellt.

Das erhaltene Verbundmaterial wurde unter den gleichen Bedingungen wie das erfindungsgemäße Verbundmaterial gewaschen. Die anschließende Bewertung zeigte, dass sowohl der Beschichtungsfilm als auch der Spinnvliesstoff beschädigt waren, so dass die erforderliche Funktionalität nicht mehr gegeben war.

## Patentansprüche

1. Konfektionierte Schutzhaube aus Verbundmaterial für Fahrzeuge und Fahrzeugteile, wobei das Verbundmaterial ein fahrzeugseitiges Trägermaterial und ein außenseitiges Beschichtungsmaterial aus einem thermoplastischen Kunststoff in Film- oder Folienform umfasst, **dadurch gekennzeichnet, dass** das Trägermaterial ein Gewebe, Gewirke oder Gelege oder ein Vliesstoff ist, der mit einem Gewebe, Gewirke oder Gelege armiert ist.

2. Schutzhaube gemäß Anspruch 1, **dadurch gekennzeichnet, dass** das Trägermaterial aus synthetischen Fasern oder Naturfasern hergestellt ist.

3. Schutzhaube gemäß Anspruch 2, **dadurch gekennzeichnet, dass** das Trägermaterial ein Polypropylen-, Baumwoll-, oder Viskosegewebe ist.

4. Schutzhaube gemäß einem oder mehreren der vorhergehenden Ansprüche, **dadurch gekennzeichnet, dass** das Trägermaterial ein Flächengewicht zwischen 60 und 200 g/m² aufweist.

5. Schutzhaube gemäß einem oder mehreren der vorhergehenden Ansprüche, **dadurch gekennzeichnet, dass** das Trägermaterial fahrzeugseitig gerauht ist.

6. Schutzhaube gemäß einem oder mehreren der vorhergehenden Ansprüche, **dadurch gekennzeichnet, dass** das Beschichtungsmaterial aus Polyethylen, Polypropylen, Polyvinylchlorid, Polyamid, thermoplastischem Polyurethan, und Polyethylenterephthalat, Ethylen/Methylacrylat-Copolymeren, Ethylen/Acrylsäure-Copolymeren, Ethylen/Butylacrylat-Copolymeren, Ethylen/Vinylacetat-Copolymeren und Mischungen aus einem oder mehreren daraus ausgewählt ist.

7. Schutzhaube gemäß einem oder mehreren der vorhergehenden Ansprüche, **dadurch gekennzeichnet, dass** das Beschichtungsgewicht des Beschichtungsmaterial zwischen 10 und 250 g/m² beträgt.

8. Schutzhaube gemäß einem oder mehreren der vorhergehenden Ansprüche, **dadurch gekennzeichnet, dass** das Beschichtungsmaterial mittels Extrusionsbeschichtung oder -kaschierung auf das Trägermaterial aufgebracht ist.

9. Verwendung eines Verbundmaterials wie in einem der Ansprüche 1 bis 8 definiert zur Herstellung einer konfektionierten Schutzhaube für Fahrzeuge und Fahrzeugteile.
